# FASCICULE DE BREVET EUROPEEN

(11) **EP 4 094 981 B1**
(45) Date de publication et mention de la délivrance du brevet: **24.04.2024**
(21) Numéro de dépôt: 22175246.2
(22) Date de dépôt: 24.05.2022
(51) Int. Cl.: B60N 2/815, B60N 2/818, B60N 2/865, B60N 2/894

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 27.05.2021 FR 2105544
(43) Date de publication de la demande: 30.11.2022
(73) Titulaire: TESCA France, 92977 Paris La Défense Cedex (FR)
(72) Inventeur: LEFEVRE, Steve, 92977 Paris La Défense Cedex (FR)
(74) Mandataire: Sayettat, Julien Christian

(56) Documents cités:
- EP-A1- 3 153 347
- EP-A1- 3 616 984

## Description

L'invention concerne un appui-tête de siège de véhicule automobile.

Il est connu, par exemple selon le document EP 3 153 347 A1 ou le document EP 3 616 984 A1, de réaliser un appui-tête de siège de véhicule automobile, ledit appui-tête comprenant :
- une armature de montage sur un dossier dudit siège, ladite armature comprenant deux tiges parallèles s'étendant verticalement,
- un corps principal monté en coulissement sur lesdites tiges de manière à pouvoir adopter une pluralité de positions de réglage vertical,
- un premier dispositif de verrouillage dudit corps principal dans la position de réglage choisie,
- un corps secondaire monté en coulissement longitudinal sur ledit corps principal, de sorte que ledit corps secondaire puisse adopter une pluralité de positions de réglage longitudinal,
- un deuxième dispositif de verrouillage dudit corps secondaire dans la position de réglage choisie, ledit dispositif comprenant un loquet monté en coulissement vertical sur ledit corps principal entre une position de verrouillage, où il coopère avec une crémaillère s'étendant longitudinalement sur ledit corps secondaire, et une position de déverrouillage, où il s'écarte de ladite crémaillère pour libérer le coulissement dudit corps secondaire,
- une traverse de déverrouillage simultané desdits dispositifs, ladite traverse étant montée en coulissement transversal sur ledit corps principal, ladite traverse présentant une extrémité pourvue d'un bouton permettant son actionnement en translation vers une position de déverrouillage, de manière à libérer le coulissement desdits corps principal et secondaire,
- un moyen ressort de renvoi de ladite traverse en position de verrouillage.

Les agencements connus présentent généralement une certaine complexité, liée notamment à l'utilisation de composants multiples, mettant par exemple en oeuvre un ressort de renvoi du loquet en position de verrouillage, la présence dudit ressort induisant en outre la nécessité de déployer un effort additionnel pour réaliser le déverrouillage des dispositifs de verrouillage.

En outre, le verrouillage du corps secondaire peut s'avérer de robustesse insuffisante en cas de choc violent d'une tête de passager sur l'appui-tête, ce qui peut s'avérer dangereux.

L'invention a pour but de pallier ces inconvénients.

A cet effet, l'invention propose un appui-tête de siège de véhicule automobile,
ledit appui-tête comprenant :
   - une armature de montage sur un dossier dudit siège, ladite armature comprenant deux tiges parallèles s'étendant verticalement,
   - un corps principal monté en coulissement sur lesdites tiges de manière à pouvoir adopter une pluralité de positions de réglage vertical,
   - un premier dispositif de verrouillage dudit corps principal dans la position de réglage choisie,
   - un corps secondaire monté en coulissement longitudinal sur ledit corps principal, de sorte que ledit corps secondaire puisse adopter une pluralité de positions de réglage longitudinal,
   - un deuxième dispositif de verrouillage dudit corps secondaire dans la position de réglage choisie, ledit dispositif comprenant un loquet monté en coulissement vertical sur ledit corps principal entre une position de verrouillage, où il coopère avec une crémaillère s'étendant longitudinalement sur ledit corps secondaire, et une position de déverrouillage, où il s'écarte de ladite crémaillère pour libérer le coulissement dudit corps secondaire,
   - une traverse de déverrouillage simultané desdits dispositifs, ladite traverse étant montée en coulissement transversal sur ledit corps principal, ladite traverse présentant une extrémité pourvue d'un bouton permettant son actionnement en translation vers une position de déverrouillage, de manière à libérer le coulissement desdits corps principal et secondaire,
   - un moyen ressort de renvoi de ladite traverse en position de verrouillage,
ledit appui-tête comprenant en outre une came de renvoi d'effort disposée entre ladite traverse et ledit loquet, ladite came présentant en vue longitudinale :
   - un point de liaison en rotation à ladite traverse selon un axe longitudinal de rotation,
   - et, latéralement de part et d'autre dudit point :
      o d'une part un premier doigt monté en coulissement dans une fente de guidage prévue dans ledit corps principal et un bord de blocage dudit loquet en position de verrouillage,
      o et d'autre part un bord d'actionnement formant surface de came prenant appui sur ledit loquet,
ladite fente étant agencée de manière à induire, lors du déplacement de ladite traverse en déverrouillage et du déplacement transversal dudit point qui en résulte :
   - un déplacement dudit bord de blocage libérant l'actionnement dudit loquet en déverrouillage,
   - et une mise en rotation de ladite came autour dudit axe, ladite rotation réalisant un déplacement vertical dudit bord d'actionnement repoussant ledit loquet vers sa position de déverrouillage.

Dans cette description, les termes de positionnement dans l'espace (longitudinal, transversal, latéral, vertical, dessus, ...) sont pris en référence à l'appui-tête disposé dans le véhicule en situation d'utilisation.

Avec l'agencement proposé, on simplifie ce qui était connu de l'art antérieur, notamment en supprimant le ressort de renvoi du loquet en position de verrouillage, la suppression dudit ressort induisant une diminution de l'effort à appliquer pour réaliser le déverrouillage des dispositifs de verrouillage.

En outre le verrouillage du corps secondaire présente une grande robustesse de par la présence du bord de blocage du loquet en position de verrouillage, ledit bord empêchant un retrait non voulu dudit loquet de la crémaillère.

D'autres particularités et avantages de l'invention apparaîtront dans la description qui suit, faite en référence aux figures jointes, dans lesquelles :

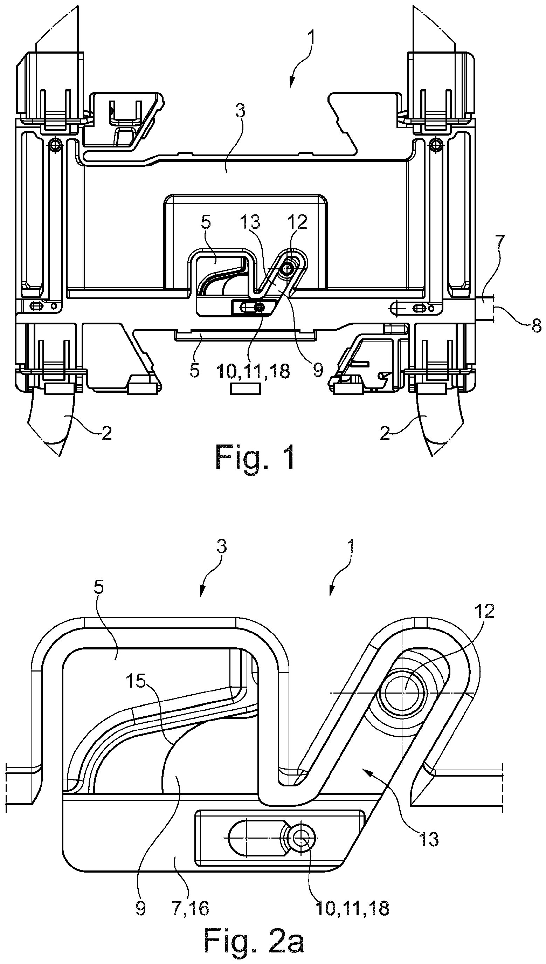

[Fig.1] est une vue schématique partielle, selon une direction longitudinale, d'un appui-tête selon une réalisation, la traverse étant en position de verrouillage,
[Fig.2a] et

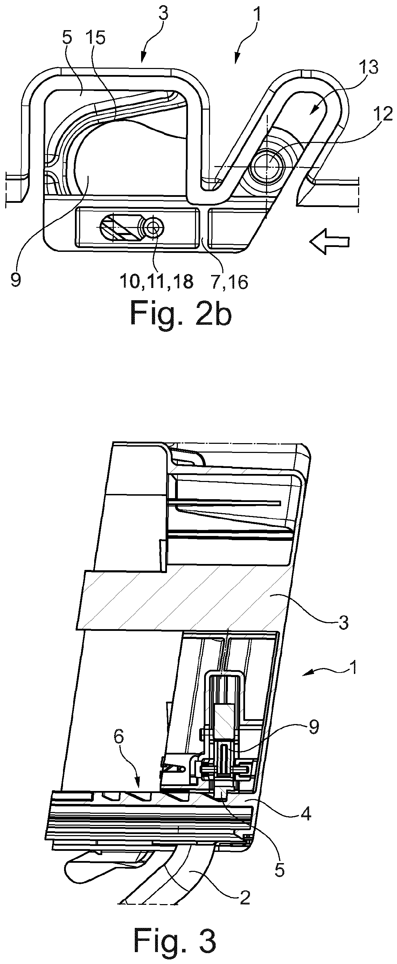

[Fig.2b] sont des vues de détail correspondant à la figure 1, la traverse étant en position de verrouillage (figure 2a) et de déverrouillage (figure 2b),

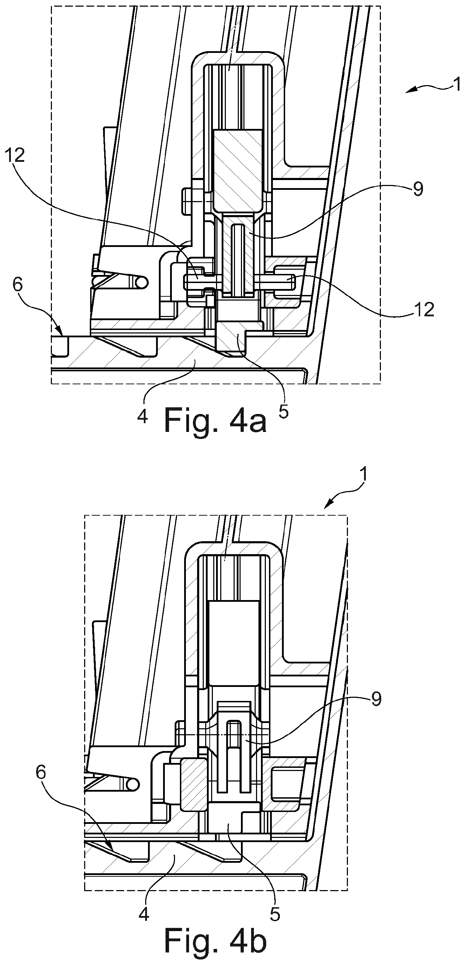

[Fig.3] est une vue schématique partielle, selon une direction transversale, de l'appui-tête des figures précédentes, le loquet étant en position de verrouillage, [Fig.4a] et
[Fig.4b] sont des vues de détail correspondant à la figure 3, le loquet étant en position de verrouillage (figure 4a) et de déverrouillage (figure 4b),

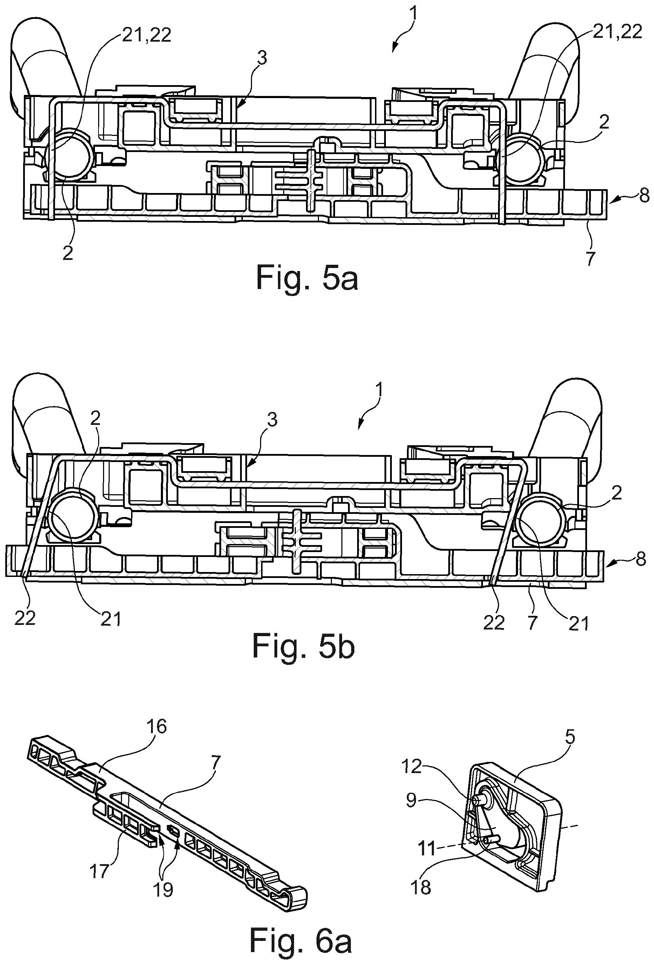

[Fig.5a] et
[Fig.5b] sont des vues schématiques partielles en coupe horizontale de l'appui-tête des figures précédentes, la traverse étant en position de verrouillage (figure 5a) et de déverrouillage (figure 5b),
[Fig.6a] et

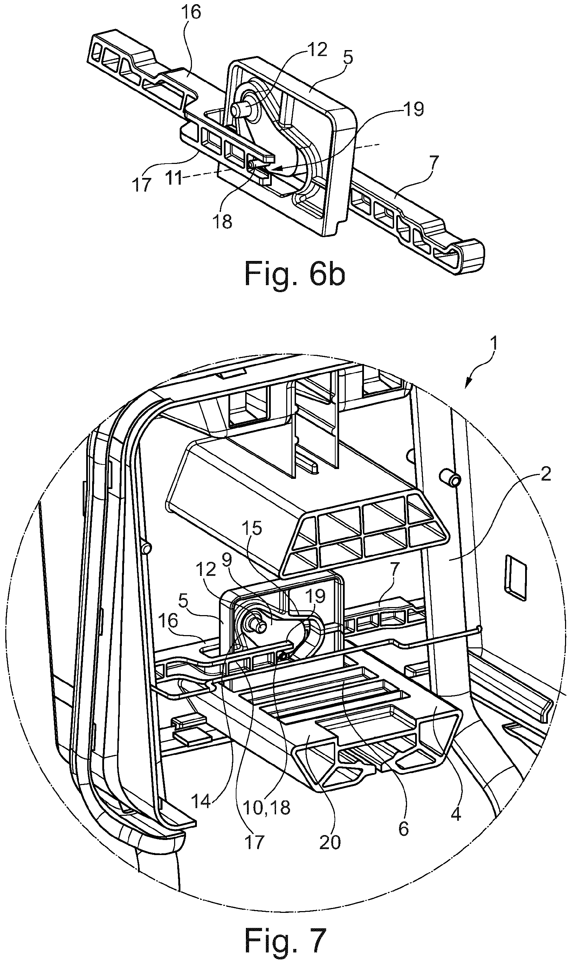

[Fig.6b] sont des vues schématiques partielles en perspective éclatée (figure 6a) et non éclatée (figure 6b) de l'appui-tête des figures précédentes,
[Fig.7] est une vue en perspective partielle de l'appui-tête de figures précédentes, le loquet étant en position de verrouillage.

En référence aux figures, on décrit un appui-tête 1 de siège de véhicule automobile, ledit appui-tête comprenant :
- une armature de montage sur un dossier dudit siège, ladite armature comprenant deux tiges 2 parallèles s'étendant verticalement,
- un corps principal 3 - notamment en matériau plastique moulé - monté en coulissement sur lesdites tiges de manière à pouvoir adopter une pluralité de positions de réglage vertical,
- un premier dispositif de verrouillage dudit corps principal dans la position de réglage choisie,
- un corps secondaire 4 - notamment en matériau plastique moulé - monté en coulissement longitudinal sur ledit corps principal, de sorte que ledit corps secondaire puisse adopter une pluralité de positions de réglage longitudinal,
- un deuxième dispositif de verrouillage dudit corps secondaire dans la position de réglage choisie, ledit dispositif comprenant un loquet 5 monté en coulissement vertical sur ledit corps principal entre une position de verrouillage, où il coopère avec une crémaillère 6 s'étendant longitudinalement sur ledit corps secondaire, et une position de déverrouillage, où il s'écarte de ladite crémaillère pour libérer le coulissement dudit corps secondaire,
- une traverse 7 de déverrouillage simultané desdits dispositifs, ladite traverse étant montée en coulissement transversal sur ledit corps principal, ladite traverse présentant une extrémité 8 pourvue d'un bouton - notamment sous forme de bouton poussoir ou de bouton rotatif non représentés - permettant son actionnement en translation vers une position de déverrouillage, de manière à libérer le coulissement desdits corps principal et secondaire,
- un moyen ressort de renvoi de ladite traverse en position de verrouillage,

ledit appui-tête comprenant en outre une came 9 de renvoi d'effort disposée entre ladite traverse et ledit loquet, ladite came présentant en vue longitudinale :
   - un point 10 de liaison en rotation à ladite traverse selon un axe 11 longitudinal de rotation,
   - et, latéralement de part et d'autre dudit point :
      o d'une part un - deux selon la réalisation représentée - premier doigt 12 monté en coulissement dans une - deux selon la réalisation représentée - fente 13 de guidage prévue dans ledit corps principal et un bord de blocage 14 dudit loquet en position de verrouillage,
      o et d'autre part un bord d'actionnement 15 formant surface de came prenant appui sur ledit loquet,
ladite fente étant agencée de manière à induire, lors du déplacement de ladite traverse en déverrouillage et du déplacement transversal dudit point qui en résulte :
   - un déplacement dudit bord de blocage libérant l'actionnement dudit loquet en déverrouillage,
   - et une mise en rotation de ladite came autour dudit axe, ladite rotation réalisant un déplacement vertical dudit bord d'actionnement repoussant ledit loquet vers sa position de déverrouillage.

Selon la réalisation représentée, la traverse 7 présente un tronc 16 et une branche 17 s'étendant parallèlement audit tronc, la came 9 étant logée entre ledit tronc et ladite branche de manière à être maintenue longitudinalement, ladite came présentant au moins un - notamment deux selon la réalisation représentée - deuxième doigt 18 formant point 10 de liaison en rotation à ladite traverse, ledit doigt s'insérant dans une encoche 19 prévue en extrémité libre de ladite branche de sorte que l'actionnement de ladite traverse en déverrouillage induise une poussée de ladite traverse sur ledit doigt.

Selon la réalisation représentée, la position de déverrouillage du loquet 5 est située au-dessus de sa position de verrouillage.

Selon la réalisation représentée, la crémaillère 6 est disposée sur un organe de guidage 20 en coulissement du corps secondaire 4 sur le corps principal 3, ledit organe étant notamment sous forme de tenon intégré audit corps secondaire, ledit tenon coulissant dans une mortaise prévue dans ledit corps principal.

Selon la réalisation représentée, le premier dispositif de verrouillage comprend :
- une pluralité de crans 21 de verrouillage s'étageant verticalement sur au moins une des tiges 2 de manière à définir une tige crantée,
- au moins une saillie 22 de verrouillage montée mobile par rapport au corps principal 3 entre une position de verrouillage, où ladite saillie s'insère dans un desdits crans, et une position de déverrouillage, où ladite saillie se retire dudit cran afin de libérer le coulissement dudit corps.

Selon la réalisation représentée, les deux tiges 2 sont crantées, les saillies 22 de verrouillage étant issues d'un fil en métal à ressort dont les parties extrêmes sont repliées de manière à former lesdites saillies, l'actionnement de ladite traverse en déverrouillage opérant un appui sur lesdites parties pour déformer ledit fil et dégager lesdites saillies des crans 21 de verrouillage.

Dans une telle réalisation, le moyen ressort de renvoi de la traverse 7 en position de verrouillage peut être uniquement formé par le fil en métal à ressort, ledit fil retournant à l'état non déformé quand ladite traverse n'est pas actionnée en déverrouillage.

## Revendications

1. Appui-tête (1) de siège de véhicule automobile, ledit appui-tête comprenant :
• une armature de montage sur un dossier dudit siège, ladite armature comprenant deux tiges (2) parallèles s'étendant verticalement,
• un corps principal (3) monté en coulissement sur lesdites tiges de manière à pouvoir adopter une pluralité de positions de réglage vertical,
• un premier dispositif de verrouillage dudit corps principal dans la position de réglage choisie,
• un corps secondaire (4) monté en coulissement longitudinal sur ledit corps principal, de sorte que ledit corps secondaire puisse adopter une pluralité de positions de réglage longitudinal,
• un deuxième dispositif de verrouillage dudit corps secondaire dans la position de réglage choisie, ledit dispositif comprenant un loquet (5) monté en coulissement vertical sur ledit corps principal entre une position de verrouillage, où il coopère avec une crémaillère (6) s'étendant longitudinalement sur ledit corps secondaire, et une position de déverrouillage, où il s'écarte de ladite crémaillère pour libérer le coulissement dudit corps secondaire,
• une traverse (7) de déverrouillage simultané desdits dispositifs, ladite traverse étant montée en coulissement transversal sur ledit corps principal, ladite traverse présentant une extrémité (8) pourvue d'un bouton permettant son actionnement en translation vers une position de déverrouillage, de manière à libérer le coulissement desdits corps principal et secondaire,
• un moyen ressort de renvoi de ladite traverse en position de verrouillage,
ledit appui-tête étant **caractérisé en ce qu'**il comprend en outre une came (9) de renvoi d'effort disposée entre ladite traverse et ledit loquet, ladite came présentant en vue longitudinale :
• un point (10) de liaison en rotation à ladite traverse selon un axe (11) longitudinal de rotation,
• et, latéralement de part et d'autre dudit point :
o d'une part un premier doigt (12) monté en coulissement dans une fente (13) de guidage prévue dans ledit corps principal et un bord de blocage (14) dudit loquet en position de verrouillage,
o et d'autre part un bord d'actionnement (15) formant surface de came prenant appui sur ledit loquet,
ladite fente étant agencée de manière à induire, lors du déplacement de ladite traverse en déverrouillage et du déplacement transversal dudit point qui en résulte :
• un déplacement dudit bord de blocage libérant l'actionnement dudit loquet en déverrouillage,
• et une mise en rotation de ladite came autour dudit axe, ladite rotation réalisant un déplacement vertical dudit bord d'actionnement repoussant ledit loquet vers sa position de déverrouillage.

2. Appui-tête selon la revendication 1, **caractérisé en ce que** la traverse (7) présente un tronc (16) et une branche (17) s'étendant parallèlement audit tronc, la came (9) étant logée entre ledit tronc et ladite branche de manière à être maintenue longitudinalement, ladite came présentant au moins un deuxième doigt (18) formant point (10) de liaison en rotation à ladite traverse, ledit doigt s'insérant dans une encoche (19) prévue en extrémité libre de ladite branche de sorte que l'actionnement de ladite traverse en déverrouillage induise une poussée de ladite traverse sur ledit doigt.

3. Appui-tête selon l'une des revendications précédentes, **caractérisé en ce que** la position de déverrouillage du loquet (5) est située au-dessus de sa position de verrouillage.

4. Appui-tête selon l'une quelconque des revendications précédentes, **caractérisé en ce que** la crémaillère (6) est disposée sur un organe de guidage (20) en coulissement du corps secondaire (4) sur le corps principal (3).

5. Appui-tête selon l'une quelconque des revendications précédentes, **caractérisé en ce que** le premier dispositif de verrouillage comprend :
• une pluralité de crans (21) de verrouillage s'étageant verticalement sur au moins une des tiges (2) de manière à définir une tige crantée,
• au moins une saillie (22) de verrouillage montée mobile par rapport au corps principal (3) entre une position de verrouillage, où ladite saillie s'insère dans un desdits crans, et une position de déverrouillage, où ladite saillie se retire dudit cran afin de libérer le coulissement dudit corps.

## Patentansprüche

1. Kopfstütze (1) für einen Kraftfahrzeugsitz, wobei die Kopfstütze umfasst:
- einen Rahmen zur Montage an einer Rückenlehne des Sitzes, wobei der Rahmen zwei parallele Stangen (2) umfasst, die sich vertikal erstrecken,
- einen Hauptkörper (3), der gleitend so an den Stangen montiert ist, dass er eine Vielzahl von vertikalen Einstellpositionen einnehmen kann,
- eine erste Vorrichtung zum Verriegeln des Hauptkörpers in der gewählten Einstellposition,
- einen Sekundärkörper (4), der längs gleitend am Hauptkörper montiert ist, sodass der Sekundärkörper eine Vielzahl von Längseinstellpositionen einnehmen kann,
- eine zweite Vorrichtung zum Verriegeln des Sekundärkörpers in der gewählten Einstellposition, wobei die Vorrichtung eine Klinke (5) umfasst, die zwischen einer Verriegelungsposition, in der sie mit einer Zahnstange (6) zusammenwirkt, die sich längs am Sekundärkörper erstreckt, und einer Entriegelungsposition, in der sie sich von der Zahnstange beabstandet, um das Gleiten des Sekundärkörpers freizugeben, vertikal gleitend am Hauptkörper montiert ist,
- eine Querstrebe (7) zum gleichzeitigen Entriegeln der Vorrichtungen, wobei die Querstrebe quer gleitend am Hauptkörper montiert ist, wobei die Querstrebe ein Ende (8) aufweist, das mit einem Knopf versehen ist, der ihr verschiebendes Betätigen zu einer Entriegelungsposition hin ermöglicht, um das Gleiten des Haupt- und des Sekundärkörpers freizugeben,
- ein Federmittel zum Umlenken der Querstrebe in die Verriegelungsposition,
wobei die Kopfstütze **dadurch gekennzeichnet ist, dass** sie weiter einen Kraftumlenknocken (9) umfasst, der zwischen der Querstrebe und der Klinke angeordnet ist, wobei der Nocken in Längsansicht aufweist:
- einen Punkt (10) zur Drehverbindung mit der Querstrebe entlang einer Längsdrehachse (11),
- und, seitlich beiderseits des Punktes:
-- einerseits einen ersten Stift (12), der gleitend in einem Führungsschlitz (13) der im Hauptkörper vorgesehen ist, montiert ist, und eine Kante zum Blockieren (14) der Klinke in der Verriegelungsposition,
-- und andererseits eine Betätigungskante (15), die eine Nockenfläche bildet, die an der Klinke anliegt,
wobei der Schlitz so angeordnet ist, dass er bei der Verlagerung der Querstrebe beim Entriegeln und der daraus resultierenden Querverlagerung des Punktes bewirkt:
- eine Verlagerung der Blockierkante, die die Betätigung der Klinke beim Entriegeln freigibt,
- und eine Drehung des Nockens um die Achse, wobei die Drehung eine vertikale Verlagerung der Betätigungskante ausführt, die die Klinke in ihre Entriegelungsposition zurückdrängt.

2. Kopfstütze nach Anspruch 1, **dadurch gekennzeichnet, dass** die Querstrebe (7) einen Rumpf (16) und einen Schenkel (17) aufweist, der sich parallel zum Rumpf erstreckt, wobei der Nocken (9) zwischen dem Rumpf und dem Schenkel so aufgenommen ist, dass er längs gehalten wird, wobei der Nocken mindestens einen zweiten Stift (18) aufweist, der einen Punkt (10) zur Drehverbindung mit der Querstrebe bildet, wobei sich der Stift in eine Kerbe (19) einfügt, die am freien Ende des Schenkels vorgesehen ist, sodass die Betätigung der Querstrebe beim Entriegeln einen Schub der Querstrebe auf den Stift bewirkt.

3. Kopfstütze nach einem der vorstehenden Ansprüche, **dadurch gekennzeichnet, dass** sich die Entriegelungsposition der Klinke (5) über ihrer Verriegelungsposition befindet.

4. Kopfstütze nach einem der vorstehenden Ansprüche, **dadurch gekennzeichnet, dass** die Zahnstange (6) an einem Organ zur Gleitführung (20) des Sekundärkörpers (4) am Hauptkörper (3) angeordnet ist.

5. Kopfstütze nach einem der vorstehenden Ansprüche, **dadurch gekennzeichnet, dass** die erste Verriegelungsvorrichtung umfasst:
- eine Vielzahl von Verriegelungsrasten (21), die sich vertikal an mindestens einer der Stangen (2) so ausdehnen, dass sie eine gezahnte Stange definieren,
- mindestens einen Verriegelungsvorsprung (22), der in Bezug auf den Hauptkörper (3) zwischen einer Verriegelungsposition, in der sich der Vorsprung in eine der Rastungen einfügt, und einer Entriegelungsposition, in der sich der Vorsprung aus der Rastung zurückzieht, um das Gleiten des Körpers freizugeben, beweglich montiert ist.

## Claims

1. Headrest (1) for a motor vehicle seat, said headrest comprising:
• a frame for mounting on a backrest of said seat, said frame comprising two parallel vertically extending rods (2),
• a main body (3) slidably mounted on said rods so as to be able to adopt a plurality of vertical adjustment positions,
• a first device for locking said main body in the selected adjustment position,
• a secondary body (4) longitudinally slidably mounted on said main body, so that said secondary body can adopt a plurality of longitudinal adjustment positions,
• a second device for locking said secondary body in the selected adjustment position, said device comprising a latch (5) mounted for vertical sliding on said main body between a locking position, in which it cooperates with a rack (6) extending longitudinally on said secondary body, and an unlocking position, in which it moves away from said rack to release sliding of said secondary body,
• a crosspiece (7) for simultaneous unlocking of said devices, said crosspiece being transversely slidably mounted on said main body, said crosspiece having an end (8) provided with a knob enabling it to be actuated in translation towards an unlocking position, so as to free sliding of said main and secondary bodies,
• spring means for returning the crosspiece to the locked position,
said headrest being **characterized in that** it further comprises a force return cam (9) arranged between said crosspiece and said latch, said cam presenting in longitudinal view :
• a point (10) of rotational connection to said crosspiece along a longitudinal axis (11) of rotation,
• and, laterally on either side of said point:
o on the one hand, a first finger (12) slidably mounted in a guide slot (13) provided in said main body and a locking edge (14) of said latch in locking position,
o and secondly an actuating edge (15) forming a cam surface bearing on said latch,
said slot being arranged in such a way as to induce, during the displacement of said crosspiece in unlocking and the resulting transverse displacement of said point:
• a displacement of said locking edge releasing actuation of said latch in unlocking mode,
• and rotation of said cam about said axis, said rotation effecting a vertical displacement of said actuating edge pushing said latch towards its unlocked position.

2. Headrest according to claim 1, **characterized in that** the crosspiece (7) has a trunk (16) and a branch (17) extending parallel to said trunk, the cam (9) being housed between said trunk and said branch so as to be held longitudinally, the said cam having at least one second finger (18) forming a point (10) of connection in rotation with the said crosspiece, the said finger fitting into a notch (19) provided at the free end of the said branch so that actuation of the said crosspiece in unlocking mode induces a thrust of the said crosspiece on the said finger.

3. Headrest according to one of the preceding claims, **characterized in that** the unlocked position of the latch (5) is located above its locked position.

4. Headrest according to any of the preceding claims, **characterized in that** the rack (6) is arranged on a guide member (20) for sliding the secondary body (4) on the main body (3).

5. Headrest according to any of the preceding claims, **characterized in that** the first locking device comprises :
• a plurality of locking notches (21) vertically stepped on at least one of the rods (2) to define a toothed rod,
• at least one locking projection (22) mounted so as to be movable relative to the main body (3) between a locking position, in which said projection engages in one of said notches, and an unlocking position, in which said projection withdraws from said notch in order to release sliding of said body.
